# EUROPEAN PATENT APPLICATION

(11) **EP 3 846 279 A1**
(43) Date of publication of application: **07.07.2021**
(21) Application number: 20851848.0
(22) Date of filing: 26.03.2020
(51) Int. Cl.: H01M 50/20

(54) **BATTERY PACK**

(30) Priority: 09.08.2019 CN 201910736477; 09.08.2019 CN 201921297161 U
(71) Applicant: Dongguan Amperex Technology Limited, Dongguan, Guangdong 523000 (CN)
(72) Inventor: RUAN, Xiaoxing, Dongguan, Guangdong 523000 (CN); LI, Changjiang, Dongguan, Guangdong 523000 (CN)
(74) Representative: Klunker IP Patentanwälte PartG mbB
(86) International application number: PCT/CN2020/081495
(87) International publication number: WO 2021/027289

(57) **Abstract**

This application discloses a battery pack (100), including a first bracket (25) and a second bracket (4) that is used to fasten a battery management system (BMS) module, where the second bracket (4) is fastened to the first bracket (25) and a first groove (42) is disposed on the second bracket (4). A wire harness (5) of the battery pack (100) or another part is fastened in the first groove (42), which improves utilization of a limited space inside the battery pack(100).

## Description

### TECHNICAL FIELD

This application relates to battery packs.

### BACKGROUND

A bracket used to fasten a battery management system (BMS, BATTERY MANAGEMENT SYSTEM) module usually needs to be installed away from wire harnesses inside a battery pack. In addition, limited by an installation space and harness wiring, the bracket is typically required to be reliably fastened within a narrow installation space to avoid affecting use performance of the BMS module. Generally, the bracket is fastened to a housing or end plates at two sides inside the battery pack by using bolts. However, when the bracket is fastened to the housing, threaded holes need to be provided on the housing, which degrades waterproof and dustproof performance of the housing. When the bracket is fastened to the end plates at two sides inside the battery pack, a bracket manufacturing cost and fastening complexity are increased if a distance between the end plates increases. In addition, a large space is occupied and complexity of harness wiring is increased.

### SUMMARY

In view of this, it is necessary to provide a battery pack to resolve the foregoing problems.

An embodiment of this application provides a battery pack, including a first bracket. The battery pack further includes a second bracket that is used to fasten a battery management system module. The second bracket is fastened to the first bracket, and a first groove is disposed on the second bracket.

According to some embodiments of this application, the battery pack includes an adapter plate that is connected to a battery cell, the first bracket is provided at one side of the adapter plate, and the second bracket is provided at the other side of the adapter plate.

According to some embodiments of this application, a first through-hole is provided in the first bracket, a plurality of installation parts are disposed on the second bracket, a second through-hole is provided in the installation part, a third through-hole is provided in the adapter plate, the battery pack further includes a bolt, and the bolt passes through the first through-hole and the second through-hole and is connected to the third through-hole to fasten the second bracket, the adapter plate, and the first bracket.

According to some embodiments of this application, a plurality of fastening parts are spaced apart on the first groove.

According to some embodiments of this application, the fastening part includes a deformation part disposed on a side wall of the first groove and a clamp part disposed at one end of the deformation part.

According to some embodiments of this application, the fastening part includes two deformation parts disposed on the side wall of the first groove, the two deformation parts have respective clamp parts disposed opposite each other, and fastening parts disposed on different side walls of the first groove are disposed symmetrically.

According to some embodiments of this application, a clamp part of at least one fastening part is farther away from a bottom wall of the first groove than other clamp parts.

According to some embodiments of this application, one end of the first groove is wider than the other end.

According to some embodiments of this application, the second bracket further includes a plurality of embedded or hot melt nuts.

According to some embodiments of this application, a second groove is further disposed on the second bracket, the nut is accommodated in the second groove, and a bottom wall of the second groove is lower than an end surface of one side of the nut that faces away from the first bracket.

According to some embodiments of this application, the battery pack includes a wire harness and the wire harness is accommodated in the first groove.

In the foregoing battery pack, the first groove is disposed on the second bracket, so that the wire harness or another part is fastened in the first groove, improving utilization of a limited space inside the battery pack.

### BRIEF DESCRIPTION OF DRAWINGS

FIG. 1 is a schematic structural diagram of a battery pack according to an embodiment of this application when a housing is opened.
FIG. 2 is another schematic structural diagram of a battery pack when a housing is opened.
FIG. 3 is a schematic structural diagram of the battery pack in FIG. 1 when a housing is removed.
FIG. 4 is a schematic structural diagram of a second bracket of the battery pack in FIG. 1.
FIG. 5 is a schematic structural diagram of the second bracket in FIG. 4 in an X direction.
FIG. 6 is a schematic structural diagram of the second bracket in FIG. 4 from another perspective.
FIG. 7 is a schematic cross-sectional diagram of the second bracket in FIG. 6 along an A-A line.
FIG. 8 is a schematic cross-sectional diagram of the second bracket in FIG. 6 along a B-B line.
FIG. 9 is a schematic structural diagram of the battery in FIG. 1 with the second bracket removed.
FIG. 10 is a schematic structural diagram of the battery module of the battery shown in FIG. 9.
FIG. 11 is an exploded view of the battery module shown in FIG. 10.
FIG. 12 is an enlarged view of a part III in FIG. 10.
FIG. 13 is an enlarged view of a part IV in FIG. 10.
FIG. 14 is a schematic structural diagram of assembling a battery module in a housing.
FIG. 15 is a front view of assembling a battery module in a housing in FIG. 14.
FIG. 16 is an enlarged view of a part VIII in FIG. 15.
FIG. 17 is an enlarged view of a part IX in FIG. 15.
FIG. 18 is a schematic structural diagram of a first end plate of the battery module in FIG. 10.
FIG. 19 is a schematic structural diagram of a second end plate of the battery module in FIG. 10.

### Reference signs of main components:

| | |
|---|---|
| battery pack | 100 |
| housing | 1 |
| first housing | 11 |
| first assembly | 111 |
| fifth through-hole | 112 |
| positioning hole | 113 |
| positioning protrusion | 114 |
| second housing | 12 |
| first positioning part | 121 |
| second positioning part | 122 |
| third positioning part | 123 |
| fourth through-hole | 124 |
| third housing | 13 |
| battery module | 2 |
| battery cell | 20 |
| first end plate | 21 |
| first installation part | 211 |
| boss | 212 |
| second end plate | 22 |
| second installation part | 221 |
| fastening band | 23 |
| fastener | 24 |
| first fastening part | 241 |
| first protrusion | 2411 |
| second protrusion | 2412 |
| base | 2413 |
| first fastening surface | 2414 |
| second fastening part | 242 |
| second fastening surface | 2421 |
| first bracket | 25 |
| first through-hole | 251 |
| protrusion | 252 |
| separator | 26 |
| buffer | 27 |
| retainer | 28 |
| end-plate nut | 29 |
| adapter plate | 3 |
| third through-hole | 31 |
| second bracket | 4 |
| bracket body | 41 |
| first groove | 42 |
| installation part | 43 |
| second through-hole | 431 |
| support | 433 |
| stiffened plate | 435 |
| bolt | 44 |
| nut | 45 |
| second groove | 46, 46a |
| bottom wall | 461, 461a, 425 |
| side wall | 463, 463a, 421, 423 |
| fastening part | 47, 47a |
| deformation part | 471, 471a |
| clamp part | 473, 473a |
| strap hole | 48 |
| wire harness | 5 |
| output end | 51 |
| electrode | 6 |
| connector | 7 |
| inlet direction | Y |
| first direction | Z |

This application will be further described with reference to the accompanying drawings in the following specific embodiments.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

Unless otherwise defined, all technical and scientific terms used in this specification shall have the same meanings as commonly understood by those skilled in the art to which this application belongs. The terms used in the specification of this application are merely intended to describe specific embodiments but not intended to constitute any limitation on this application.

Some implementations of this application are described in detail below with reference to the accompanying drawings. In absence of conflicts, the following embodiments and features in the embodiments may be combined.

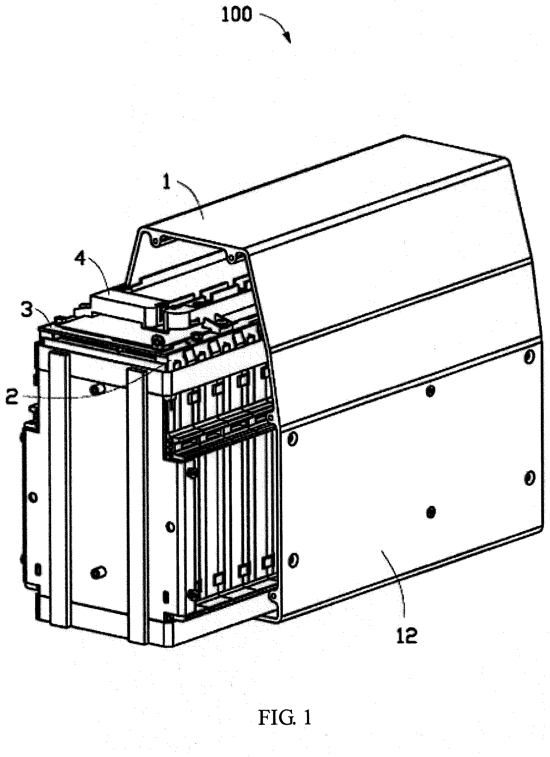

Referring to FIG. 1, a battery pack 100 includes a first bracket 25 and a second bracket 4. The second bracket 4 is used to support and fasten a battery management system (BMS, BATTERY MANAGEMENT SYSTEM) module (not shown). The second bracket 4 is fastened to the first bracket 25. A first groove 42 is disposed on the second bracket 4. In an embodiment, the first groove 42 is used to wire a wire harness 5 inside the battery pack 100, which is not limited. The first groove 42 fastens the wire harness 5 and allows the wire harness 5 to pass through. It can be understood that in another embodiment, other electronic elements such as flexible flat cables or flexible printed circuits that are used for connection or other parts may also be fastened to the first groove 42.

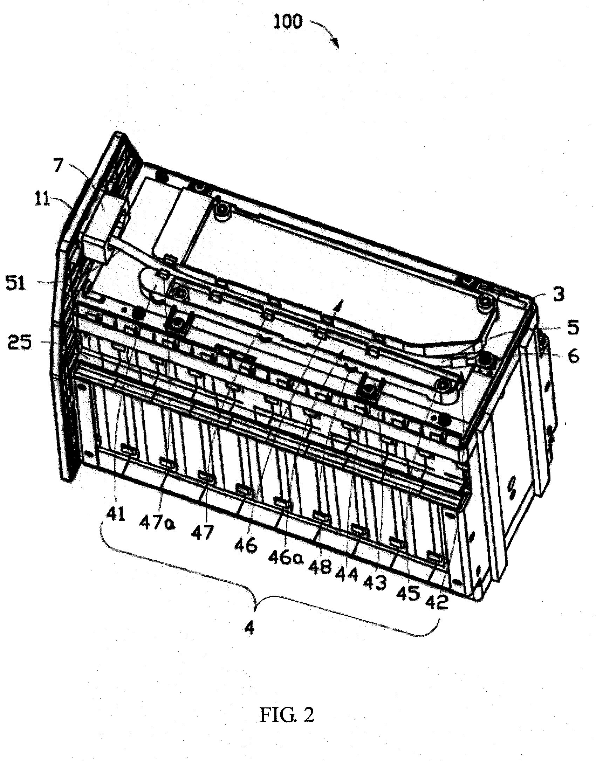

Referring to FIG. 1 and FIG. 2, the battery pack 100 further includes a housing 1, and a battery module 2 and an adapter plate 3 that are disposed inside the housing 1. The housing 1 includes a first housing 11 and a second housing 12. The second housing 12 is substantially a hollow structure that has openings at both ends. The first housing 11 packages one side of the second housing 12. The battery module 2 is accommodated inside a cavity of the second housing 12. The battery module 2 includes a plurality of first brackets 25 that are arranged sequentially and a plurality of battery cells 20. In an embodiment, the first bracket 25 is used to fasten the battery cell 20. The adapter plate 3 is disposed at one side of the plurality of first brackets 25 and is used to electrically connect the plurality of battery cells 20. The second bracket 4 is connected to some of the first brackets 25 and is located at one side of the adapter plate 3 that faces away from the plurality of first brackets 25. In an embodiment, the wire harness 5 is a positive harness, which is not limited. An output end 51 of the wire harness 5 is connected to a connector 7. The connector 7 is fastened to the first housing 11. Another end of the wire harness 5 that is opposite to the output end 51 is connected to an electrode 6. In an embodiment, the electrode 6 is disposed on the adapter plate 3, which is not limited. It can be understood that the electrode 6 may alternatively be disposed at another position inside the battery pack 100.

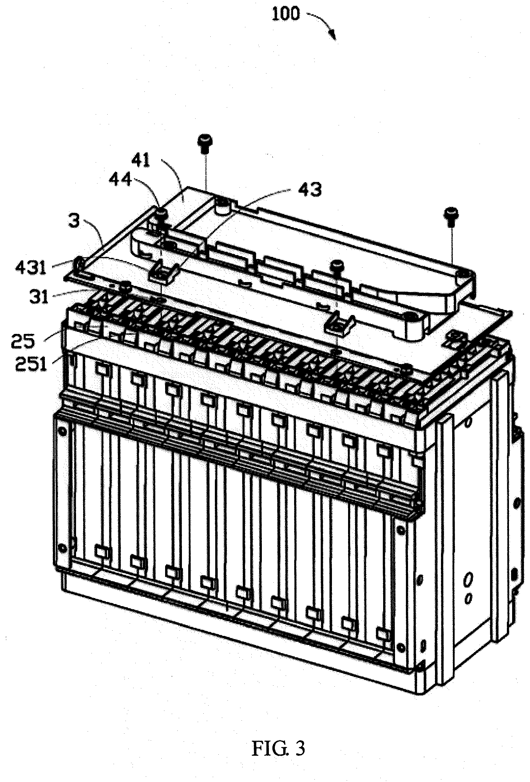

Referring to FIG. 2 and FIG. 3, the second bracket 4 includes a bracket body 41 and a plurality of installation parts 43 disposed on the bracket body 41. In an embodiment, there are four installation parts 43. Each two of the four installation parts 43 are grouped as one group and disposed at two opposite sides of the bracket body 41, which is not limited. A first through-hole 251 is provided in the first bracket 25. A second through-hole 431 is provided in the installation part 43. A third through-hole 31 is provided in the adapter plate 3. The battery pack 100 further includes a bolt 44. The bolt 44 sequentially passes through the second through-hole 431 and the third through-hole 31 and is connected to the first through-hole 251. In an embodiment, the first through-hole 251 has a threaded hole. The bolt 44 fits in and is fastened to the threaded hole, which is not limited. The bolt 44 may alternatively be another fastener. One end of the bolt 44 is held down onto the installation parts 43 and makes the installation parts 43 press the adapter plate 3 tightly onto the first bracket 25 so that the adapter plate 3 is fastened between the second bracket 4 and the plurality of first brackets 25.

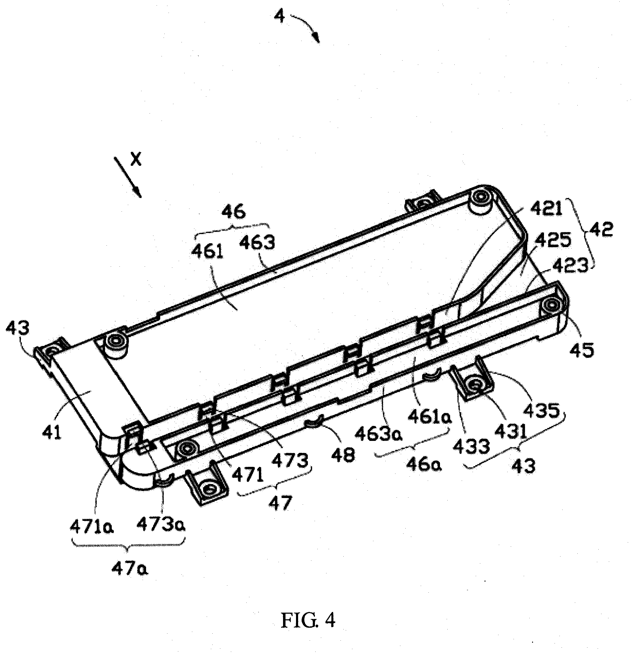

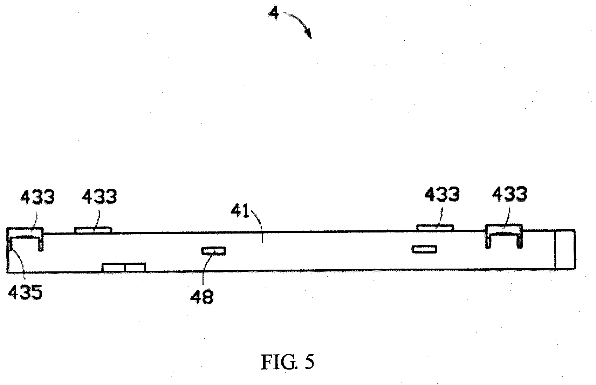

Referring to FIG. 4 and FIG. 5, a support 433 that protrudes from the bracket body 41 is disposed at one side of the installation part 43 that faces towards the first bracket 25. The support 433 is attached to the adapter plate 3. Two stiffened plates 435 are disposed at two sides of the second through-hole 431 on the installation part 43. The stiffened plates 435 are connected to the bracket body 41 and are used to increase strength of the installation part 43. It can be understood that in another embodiment, the stiffened plates 435 may alternatively be omitted.

It can be understood that in another embodiment, there may be two or another quantity of installation parts 43. The plurality of installation parts 43 may alternatively be disposed at the same side of the bracket body 41.

Referring to FIG. 4, the second bracket 4 further includes a plurality of nuts 45. In an embodiment, there are four nuts 45, which is not limited. The four nuts are disposed around the bracket body 41 and are used to connect the battery management system module.

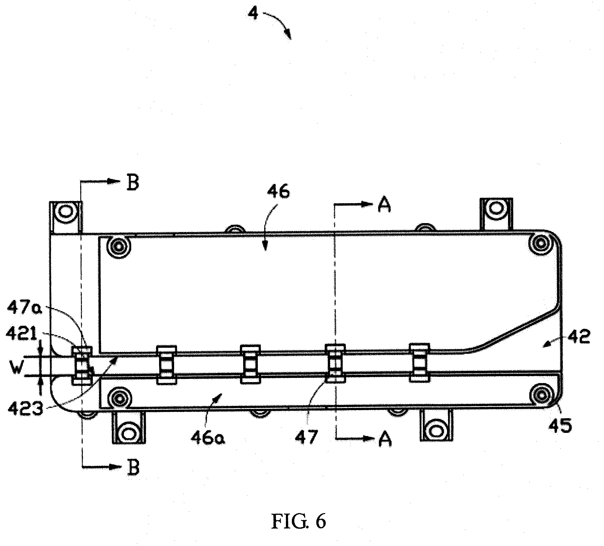

Referring to FIG. 4 and FIG. 6, a second groove 46 and a second groove 46a are disposed on the second bracket 4. In an embodiment, the second groove 46 and the second groove 46a are disposed on the bracket body 41 and are located at two sides of a first groove 42, which is not limited. Two nuts 45 are accommodated in the second groove 46 and are located at two top corners of the second groove 46 that are away from the first groove 42. Another two nuts 45 are accommodated in the second groove 46a and are located at two top corners of the second groove 46a that are away from the first groove 42. A bottom wall 461 of the second groove 46 and a bottom wall 461a of the second groove 46a are lower than an end surface of one side of the nut 45 that faces away from the adapter plate 3, so that the second groove 46 and the second groove 46a are capable of accommodating elements on the battery management system module. A side wall 463 of the second groove 46 and a side wall 463a of the second groove 46a increase strength of the bracket body 41. It can be understood that in another embodiment, the side wall 463 of the second groove 46 and the side wall 463a of the second groove 46a may alternatively be omitted.

Referring to FIG. 4 and FIG. 6, in an embodiment, the first groove 42 passes through two sides of the bracket body 41. The first groove 42 includes a side wall 421 and a side wall 423 that are opposite each other. The side wall 421 overlaps a portion of the side wall 463 of the second groove 46. The side wall 423 overlaps a portion of the side wall 463a of the second groove 46a. One end of the first groove 42 is wider than the other end. Specifically, the side wall 421 is roughly parallel to the side wall 423. At one end of the first groove 42 that is close to where the wire harness 5 is connected to the electrode 6, the side wall 421 bends and extends towards one side away from the side wall 423, to gradually enlarge a distance between the side wall 421 and the side wall 423. Preferably, the distance w of a parallel section between the side wall 421 and the side wall 423 satisfies: d+2 mm≤w≤d+3 mm, where d is a diameter of the wire harness 5.

It can be understood that in another embodiment, the second groove 46 and the second groove 46a may alternatively be combined into one groove and located at one side of the first groove 42. The second groove 46 and/or the second groove 46a may alternatively be separated into a plurality of grooves.

In some embodiments, the second bracket 4 is an injection molded housing structure. The nut 45 is embedded in the second bracket 4. Preferably, materials used to manufacture the second bracket 4 include PPO and PC+ABS, which is not limited.

It can be understood that in another embodiment, the second bracket 4 may alternatively be made of other materials. For example, the second bracket 4 is made of a nylon material and formed through mechanical treatment. The nut 45 may alternatively be embedded in the bracket body 41 through hot melting or ultrasonic wave.

Referring to FIG. 2 and FIG. 4, a plurality of fastening parts 47 are spaced apart on the first groove 42. The fastening part 47 is used to clamp the wire harness 5 inside the first groove 42. A quantity of the fastening parts 47 is set based on a length of the first groove 42. Preferably, a distance between adjacent fastening parts 47 ranges from 35 mm to 45 mm.

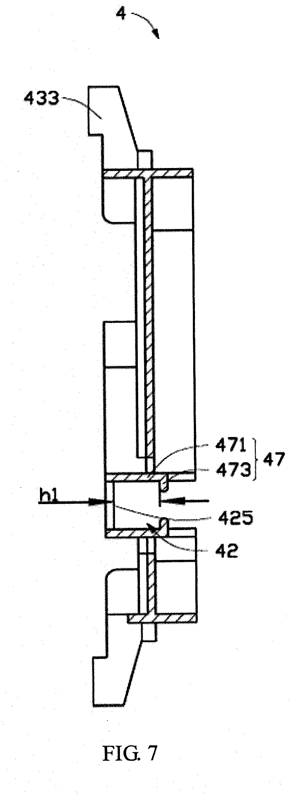

Referring to FIG. 4 and FIG. 7, the fastening part 47 includes two deformation parts 471. The two deformation parts 471 are respectively disposed on the side wall 421 and the side wall 423 of the first groove 42. The fastening parts 47 disposed on different side walls of the first groove 42 are disposed symmetrically. Specifically, in an embodiment, the deformation part 471 is formed on the side wall 421 or the side wall 423. One end of the deformation part 471 that faces towards the adapter plate 3 is disposed on the side wall 421 or the side wall 432, and two sides of the deformation part 471 are separately disconnected from the side wall 421 or the side wall 432 to realize elastic deformation. The two deformation parts 471 have respective clamp parts 473 disposed opposite each other. The two clamp parts 473 are disposed symmetrically. The two clamp parts 473 have a predeterminedet distance, which is not limited. Held down by the wire harness 5, the clamp parts 473 are capable of making the two deformation parts 471 relatively open to allow the wire harness 5 to pass through the two clamp parts 473 and enter the first groove 42. The two deformation parts 471 restore and the two clamp parts 473 abut against the wire harness 5 to make the wire harness 5 accommodated in the first groove 42.

It can be understood that in another embodiment, the fastening part 47 may alternatively include one deformation part 471 and one clamp part 473. The one deformation part 471 is disposed on one side wall of the first groove 42, and the clamp part 473 is disposed at one end of the deformation part 471, and extends towards the other side wall of the first groove 42 to block the wire harness 5 in the first groove 42.

Referring to FIG. 7, preferably, a distance h1 between the clamp part 473 and a bottom wall 425 of the first groove 42 satisfies: d+2 mm≤h1≤d+3 mm, where d is a diameter of the wire harness 5.

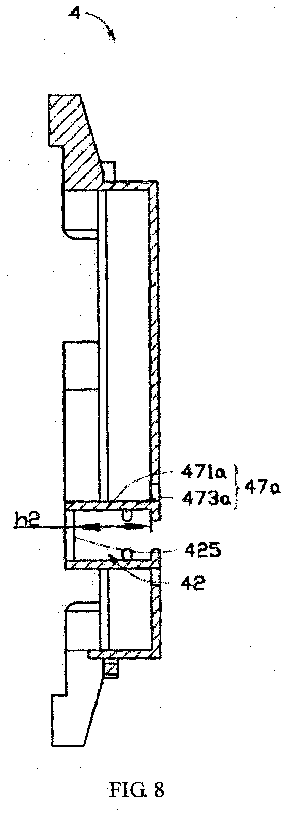

Referring to FIG. 4 and FIG. 8, a fastening part 47a is further disposed on the first groove 42. The fastening part 47a is used to clamp the wire harness 5 inside the first groove 42. The fastening part 47a is located at one side of the plurality of fastening parts 47. A structure of the fastening part 47a is roughly the same as that of the fastening part 47. The fastening part 47a includes two deformation parts 471 and two clamp parts 473a. The two deformation parts 471a are respectively disposed on the side wall 421 and the side wall 423 of the first groove 42. The two deformation parts 471a are respectively disposed opposite each other at the two deformation parts 471a. The fastening part 47a differs from the fastening part 47 in that a distance h2 between the clamp part 473a of the fastening part 47a and the bottom wall 425 of the first groove 42 satisfies: h2>hl.

It can be understood that in another embodiment, the two clamp parts 473 of the fastening part 47 may alternatively be attached or partially overlapped, as long as the two deformation parts 471 are elastically deformed under pressure and open at a relative distance that is sufficient for the wire harness 5 to pass through the two clamp parts 473 and enter the first groove 42.

It can be understood that in another embodiment, there may be two or another quantity of fastening parts 47a. Heights of the plurality of fastening parts 47a gradually increase to allow an output end 51 of the wire harness 5 to evenly bend. The fastening parts 47a may alternatively be omitted.

Referring to FIG. 4 and FIG. 5, the second bracket 4 further includes a plurality of strap holes 48. The plurality of strap holes 48 are disposed at two sides of the bracket body 41 and are used to prevent movement of wire harnesses other than the wire harness 5 inside the battery pack 100.

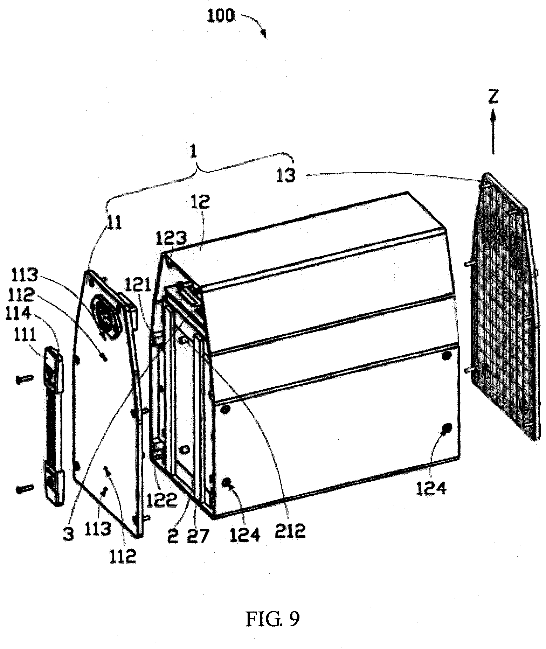

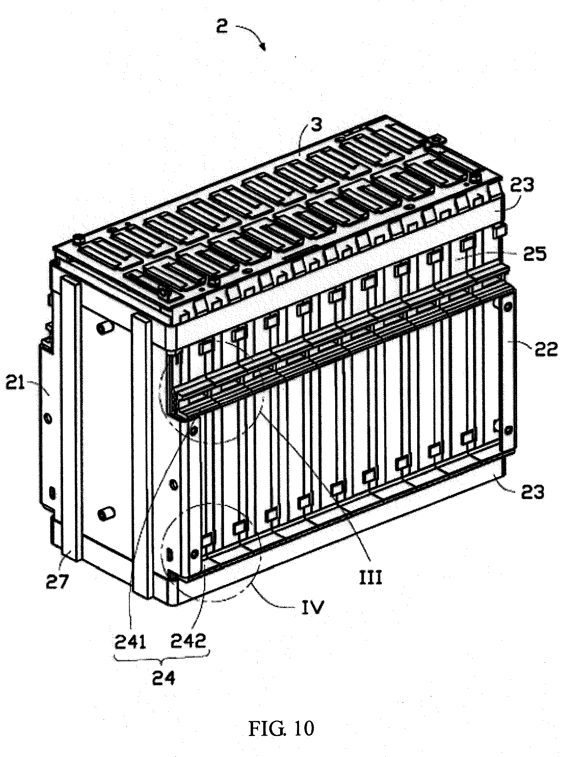

Referring to FIG. 9, FIG. 10, and FIG. 11, the battery pack 100 further includes an end plate, a fastening band 23, and a fastener 24. The end plate includes a first end plate 21 and a second end plate 22, each disposed at an end surface of the battery module 2. The fastening band 23 fits onto the battery module 2 and fastens the first end plate 21 and the second end plate 22. A positioning member is further disposed inside the housing 1. The fastener 24 is disposed on the battery module 2. When the battery module 2 is assembled into the housing 1, the fastener 24 fits the positioning member inside the housing 1 to prevent a movement of the battery module 2.

Specifically, a plurality of battery cells 20 are stacked together. Each battery cell 20 is accommodated in the first bracket 25. The battery cell 20 is roughly a rectangular shape. A size of the first bracket 25 matches a size of the battery cell 20. The first bracket 25 is roughly a hollow rectangular frame and the first bracket 25 is fastened around the battery cell 20. The fastening band 23 fits onto an exterior of the plurality of first brackets 25 along a direction parallel to stacking of the battery cells 20, so as to fasten the plurality of battery cells 20 together and prevent the plurality of battery cells 20 from getting loose. The first end plate 21 and the second end plate 22 are respectively disposed at end surfaces of two outermost battery cells 20 of the battery module 2. When the fastening band 23 fits onto the plurality of first brackets 25, the first end plate 21 and the second end plate 22 are also fastened in the fastening band 23 and press the plurality of battery cells 20 under a tension effect of the fastening band 23, to further fasten the plurality of battery cells 20. The adapter plate 3 is fixedly disposed at a short side of the first bracket 25.

A retainer 28 is further disposed at an end of a long side of the first bracket 25, where the retainer 28 is roughly an elastic piece. In an embodiment, the retainer 28 and the first bracket 25 are an integrally formed structure. After the fastening band 23 fits onto the plurality of first brackets 25, the fastening band 23 is pushed towards the retainer 28, so that the fastening band 23 is partially inserted between an exterior of the first bracket 25 and an interior of the retainer 28. The retainer 28 prevents a movement of the fastening band 23, to prevent the fastening band 23 from getting off from the end of the first bracket 25. A separator 26 is further disposed between any adjacent battery cells 20 to provide an expansion space for expansion of the battery cell 20. Specifically, in this implementation, the separator 26 is foam. When the battery cell expands, the separator 26 can be compressed. Separators 26 are also disposed between the first end plate 21 and the battery cell 20, and between the second end plate 22 and the battery cell 20.

The housing 1 further includes a third housing 13. The third housing 13 is disposed at one end of the second housing 12 that faces away from the first housing 11 and cooperates with the first housing 11 to package the second housing 12. In other words, the first housing 11 and the third housing 13 are used as end covers of the second housing 12. A buffer 27 is disposed between the first end plate 21 and the first housing 11 and disposed inside the second housing 12. The buffer 27 is also disposed between the second end plate 22 and the third housing 13, to buffer vibration of the battery module 2 inside the housing 1. The buffer 27 is made of an elastic material and is preferably a rubber pad. In another embodiment, the buffer 27 may alternatively be a flexible material such as foam, foam silicone, and sponge. This is not limited in this application. In an embodiment, the buffer 27 is bonded to surfaces of the first end plate 21 and the second end plate 22 that face away from the battery module 2. It can be understood that in another embodiment, the buffer 27 may alternatively be fastened to surfaces of the first housing 11 and the second housing 12 that face towards the battery module 2.

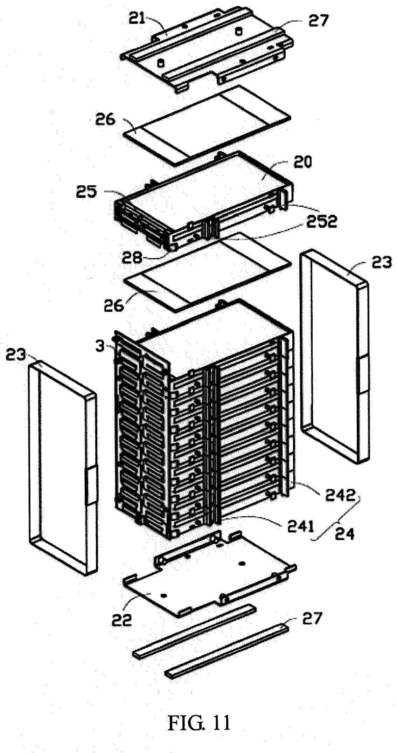

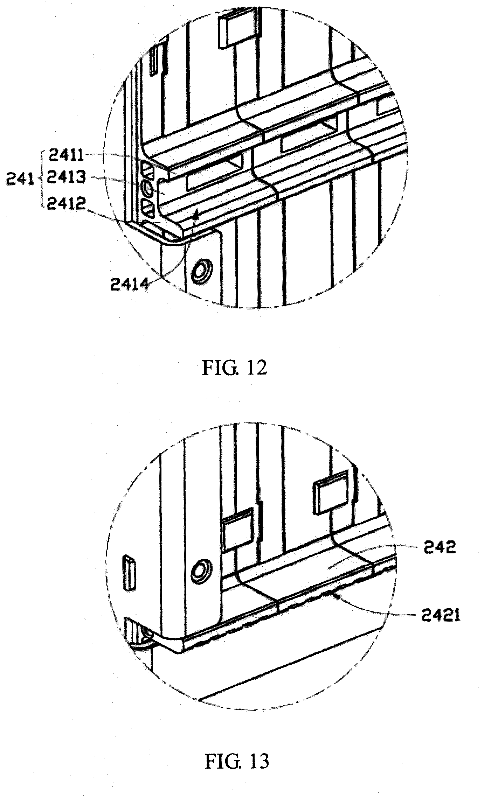

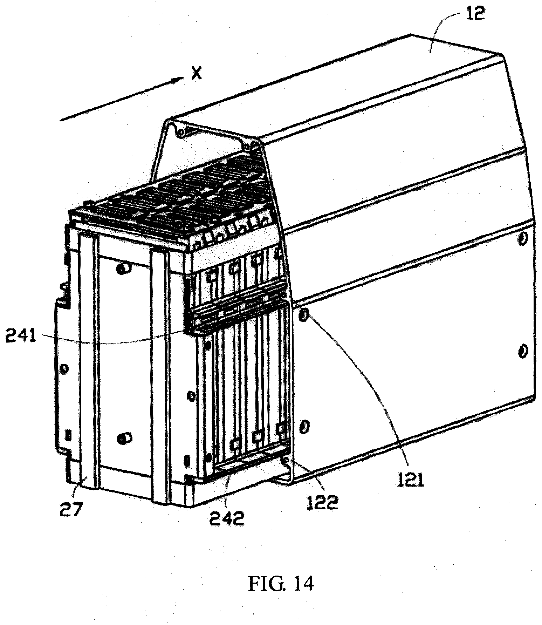

Referring to FIG. 11 to FIG. 14, the fastener 24 includes a first fastening part 241 and a second fastening part 242. The first fastening part 241 and the second fastening part 242 are disposed at a side of the battery module 2, and the first fastening part 241 and the second fastening part 242 are spaced apart. A direction shown by an arrow in FIG. 14 is an inlet direction Y in which the battery module 2 enters the second housing 12. In an embodiment, two sets of first fastening parts 241 are symmetrically disposed at two sides of the battery module 2, and two sets of second fastening parts 242 are also symmetrically disposed at the two sides of the battery module 2. In another embodiment, there may be one set of first fastening parts 241 and one set of second fastening parts 242, which are disposed at different sides of the battery module 2. The positioning member is disposed on an inner wall of the second housing 12. The positioning member includes a first positioning part 121 and a second positioning part 122. A position of the first positioning part 121 corresponds to the first fastening part 241, and a position of the second positioning part 122 corresponds to the second fastening part 242.

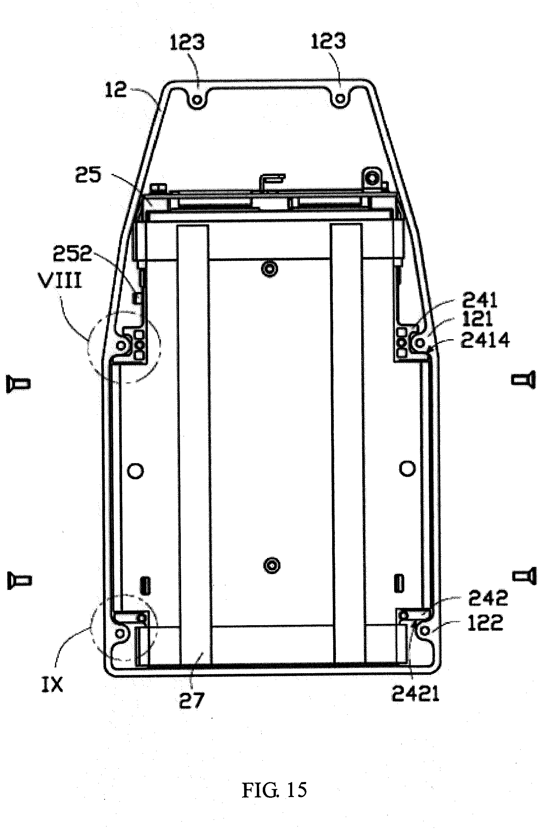

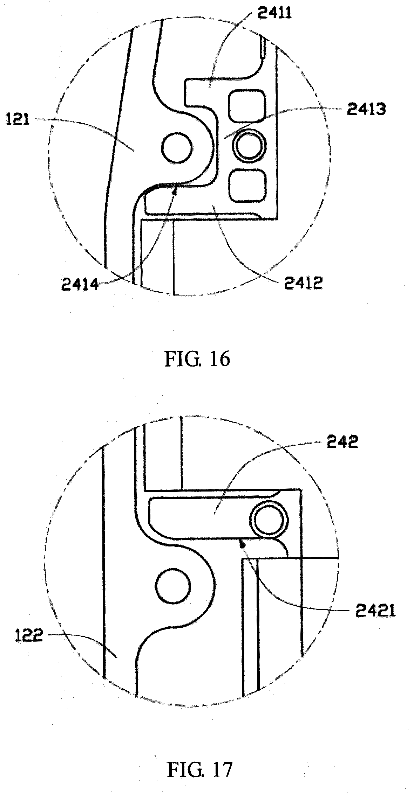

Continuing to refer to FIG. 15, FIG. 16, and FIG. 17, the fastener 24 is disposed at a long side of the first bracket 25. The first fastening part 241 and the second fastening part 242 are disposed at the same side of the first bracket 25. Specifically, the first fastening part 241 is disposed close to the adapter plate 3 and the second fastening part 242 is disposed at one end of the long side of the first bracket 25 that is away from the adapter plate 3. A cross-section of the first fastening part 241 is roughly U-shaped and the first fastening part 241 includes a first protrusion 2411, a second protrusion 2412, and a base 2413. The first protrusion 2411 and the second protrusion 2412 are disposed opposite each other, and each protrudes from one end of the base 2413. The first positioning part 121 is disposed between the first protrusion 2411 and the second protrusion 2412, and fits the first fastening part 241. A side of the second protrusion 2412 that faces towards the first protrusion 2411 is a first fastening surface 2414, and the first fastening surface 2414 supports the first positioning part 121. In other words, the first positioning part 121 abuts against the first fastening surface 2414, to prevent a movement of the battery module 2 along a first direction. In this embodiment, the first direction is a direction shown by a Z axis in FIG. 9.

A side wall of the second housing 12 includes an inclined surface and a vertical surface. The inclined surface is close to a top surface of the second housing 12. The first fastening part 241 and the first positioning part 121 are roughly located at an intersection between the inclined surface and the vertical surface. The first protrusion 2411 is located above the second protrusion 2412. To ensure that the battery module 2 can be smoothly inserted into the second housing 12, a length of the first protrusion 2411 is less than a length of the second protrusion 2412. It can be understood that in another embodiment, the length of the first protrusion 2411 may be the same as the length of the second protrusion 2412. This is determined by an actual shape of the housing 1 and is not limited in this application.

A cross-section of the second fastening part 242 is roughly a rectangular shape. A side of the second fastening part 242 that faces away from the first fastening part 241 is a second fastening surface 2421. The second positioning part 122 supports or abuts against the second fastening surface 2421, to prevent a movement of the battery module 2 along a second direction, that is, to prevent a downward movement of the battery module 2 in a perspective of FIG. 14. The second direction is opposite the Z-axis direction in FIG. 9. It can be understood that the second protrusion 2412 of the first fastening part 241 and the second fastening part 242 are disposed between the first positioning part 121 and the second positioning part 122, to prevent upward and downward movements of the battery module 2 inside the second housing 12. In addition, fasteners 24 are disposed at both sides of the battery module 2 and positioning members corresponding to the fasteners 24 are also disposed correspondingly on two symmetric inner walls of the second housing 12. This effectively reduces mechanical damage caused by external vibrations and shocks on the battery module 2 and improves safety of using the battery module 2.

The fasteners 24 fit the positioning members inside the second housing 12 to prevent a circumferential movement of the battery module 2 and guide an insertion direction of the battery module 2.

Referring again to FIG. 11, lengths of the first fastening part 241 and the second fastening part 242 are the same as a side width of a single first bracket 25. A plurality of first fastening parts 241 and a plurality of second fastening parts 242 are connected along with stacking of the plurality of battery cells 20 to form the fastener 24. It can be understood that in another embodiment, the lengths of the first fastening part 241 and the second fastening part 242 may be the same as a length of the battery module 2. A single first fastening part 241 and a single second fastening part 242 may be simultaneously connected and fastened to a side of the plurality of first brackets 25.

Referring again to FIG. 11 and FIG. 15, the first bracket 25 is further provided with a protrusion 252, and the protrusion 252 is disposed only at one side of the first bracket 25. As described above, the battery module 2 includes a plurality of stacked battery cells 20 and the first bracket 25, with the battery cells 20 disposed inside the first bracket 25. The protrusion 252 is used to prevent the first bracket 25 from being inversely installed during stacking installation, and is further used to prevent the installed battery module 2 and the adapter plate 3 from being inversely welded during welding.

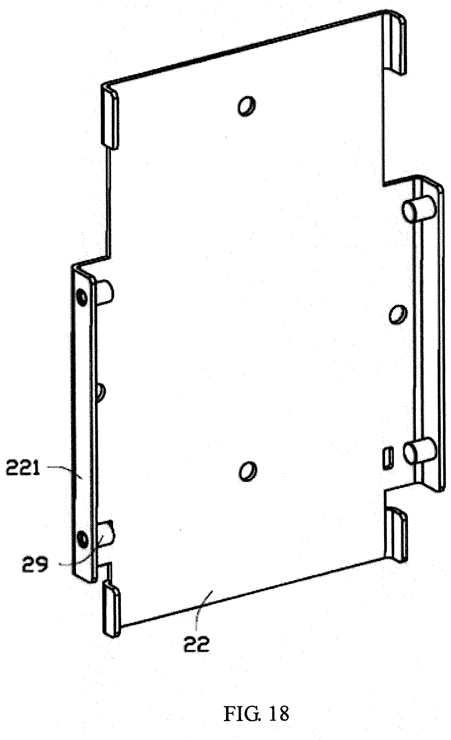

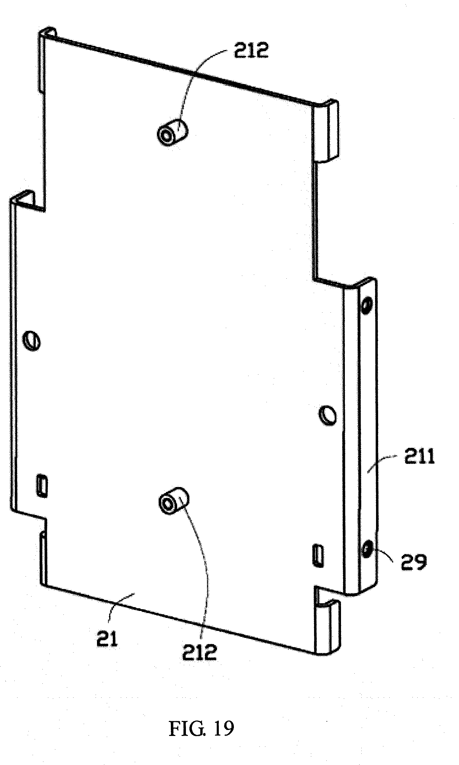

Referring to FIG. 9, FIG. 18, and FIG. 19, first installation parts 211 are disposed at two sides of the first end plate 21, and second installation parts 221 that are similar to the first installation parts 211 in structure are disposed at two sides of the second end plate 22. The first installation parts 211 and the second installation parts 221 are roughly perpendicular to end surfaces of the first end plate 21 and the second end plate 22. End-plate nuts 29 are disposed on both the first installation parts 211 and the second installation parts 221. Fourth through-holes 124 corresponding to the end-plate nuts 29 are provided in the side wall of the second housing 12. In an embodiment, the end-plate nuts 29 are preferably blind nuts. Fasteners such as bolts and screws that match the end-plate nuts 29 are screwed in through the fourth through-holes 124 to fixedly connect the end-plate nuts 29, so that the first end plate 21 and the second end plate 22 are fixedly connected to the second housing 12.

A third positioning part 123 is further disposed at a top end of a cavity of the second housing 12. Installation holes are provided on the first positioning part 121, the second positioning part 122, and the third positioning part 123. Other bolts corresponding to the installation holes are disposed on the first housing 11 and the third housing 13, and are used to fasten and install the first housing 11 and the third housing 13 at two ends of the second housing 12.

The battery pack 100 further includes a first assembly 111. The first assembly 111 is disposed on a surface of the first housing 11 that faces away from the battery module 2. A boss 212 is disposed on an end surface of the first end plate 21 that faces towards the first housing 11. A through-hole (not shown) is provided in the boss 212. A fifth through-hole 112 corresponding to the boss 212 is provided in the first housing 11. Another bolt passes through the first assembly 111 and the fifth through-hole 112 and is connected to the boss 212, so that the first assembly 111, the first housing 11, and the first end plate 21 are fixedly connected together. A positioning hole 113 is further provided on the first housing 11. Positioning protrusions 114 are disposed at two ends of the first assembly 111. The positioning protrusions 114 are accommodated in the positioning hole 113, to prevent the first assembly 111 from moving during installation.

In the foregoing battery pack 100, the second bracket 4 is fastened to the first bracket 25. Although a quantity of the first brackets 25 increases, installation of the second bracket 4 is not affected by a quantity change of battery cells because the first through-hole 251 is provided in each first bracket 25. In addition, the first groove 42 is disposed on the second bracket 4, so that the wire harness 5 or another part is fastened in the first groove 42, improving utilization of a limited space inside the battery pack 100.

The foregoing embodiments are merely intended to describe the technical solutions of this application, but not intended to constitute any limitation. Although this application is described in detail with reference to the example embodiments, persons of ordinary skill in the art should understand that modifications or equivalent replacements can be made to the technical solutions of this application, without departing from the spirit and essence of the technical solutions of this application.

## Claims

1. A battery pack, comprising a first bracket, **characterized in that** the battery pack further comprises a second bracket that is used to fasten a battery management system module, the second bracket is fastened to the first bracket, and a first groove is disposed on the second bracket.

2. The battery pack according to claim 1, **characterized in that** the battery pack comprises an adapter plate connected to a battery cell, the first bracket is provided at one side of the adapter plate, and the second bracket is provided at the other side of the adapter plate.

3. The battery pack according to claim 2, **characterized in that** a first through-hole is provided in the first bracket, a plurality of installation parts are disposed on the second bracket, a second through-hole is provided in the installation part, a third through-hole is provided in the adapter plate, the battery pack further comprises a bolt, and the bolt passes through the first through-hole and the second through-hole and is connected to the third through-hole to fasten the second bracket, the adapter plate, and the first bracket.

4. The battery pack according to claim 1, **characterized in that** a plurality of fastening parts are spaced apart on the first groove.

5. The battery pack according to claim 4, **characterized in that** the fastening part comprises a deformation part disposed on a side wall of the first groove and a clamp part disposed at one end of the deformation part.

6. The battery pack according to claim 5, **characterized in that** the fastening part comprises two deformation parts disposed on the side wall of the first groove, the two deformation parts have respective clamp parts disposed opposite each other, and fastening parts disposed on different side walls of the first groove are disposed symmetrically.

7. The battery pack according to claim 6, **characterized in that** a clamp part of at least one fastening part is farther away from a bottom wall of the first groove than other clamp parts.

8. The battery pack according to claim 1, **characterized in that** one end of the first groove is wider than the other end.

9. The battery pack according to claim 1, **characterized in that** the second bracket further comprises a plurality of embedded or hot melt nuts.

10. The battery pack according to claim 9, **characterized in that** a second groove is further disposed on the second bracket, the nut is accommodated in the second groove, and a bottom wall of the second groove is lower than an end surface of one side of the nut that faces away from the first bracket.

11. The battery pack according to any one of claims 1 to 10, **characterized in that** the battery pack comprises a wire harness, and the wire harness is accommodated in the first groove.
